# EUROPÄISCHE PATENTSCHRIFT

(11) **EP 0 564 925 B1**
(45) Veröffentlichungstag und Bekanntmachung des Hinweises auf die Patenterteilung: **12.11.1997**
(21) Anmeldenummer: 93105037.1
(22) Anmeldetag: 26.03.1993
(51) Int. Cl.: G02B 5/30

(54) **Polarisationsfolie**
Polarizing film
Feuille polarisante

(30) Priorität: 08.04.1992 DE 4211775
(43) Veröffentlichungstag der Anmeldung: 13.10.1993
(73) Patentinhaber: Agfa-Gevaert AG, 51373 Leverkusen (DE)
(72) Erfinder: Ostoja Starzewski, Karl-Heinz Alexander, Dr., W-6368 Bad Vilbel (DE)

(56) Entgegenhaltungen:
- EP-A- 0 249 019
- EP-A- 0 297 927
- JOURNAL OF THE OPTICAL SOCIETY OF AMERICA Bd. 41, Nr. 12, Dezember 1951, Seiten 45-51; E.H. LAND : 'Some aspects of the development of sheet polarizers'
- PATENT ABSTRACTS OF JAPAN vol. 5, no. 107 (P-70) 11. Juli 1981; & JP-A-56 048 601

## Beschreibung

Die Erfindung betrifft eine Polarisationsfolie mit verbesserter Sperrstellung, insbesondere im Bereich 400 bis 450 nm.

Es ist bekannt, Polarisationsfolien auf der Basis von Polyvinylalkohol herzustellen, die wenigstens eine dichroitische Substanz enthalten. Als dichroitische Substanzen werden Iod, bestimmte organische Farbtoffe (siehe EP-A 297 927 und darin genannte Literatur) und Polyacetylen (EP-B-249 019) empfohlen. Damit die Folien ihre polarisierende Eigenschaft entfalten können, müssen sie gereckt, d.h. auf ein mehrfaches ihrer ursprünglichen, nach dem Gießen oder Extrudieren erhaltenen Länge gedehnt sein.

Je nach dichroitischer Substanz geht man unterschiedlich vor. Bei Verwendung von Iod, das derzeit die am häufigsten verwendete dichroitische Substanz ist, verstreckt man die Polyvinylalkoholfolie, die noch keine dichroitische Substanz enthält, und taucht sie dann in eine wäßrige I₂/KI-Lösung, aus der das Iod in die Folie diffundiert. Bei Verwendung von organischen Farbstoffen oder von Polyacetylen wird die dichroitische Substanz gemeinsam mit dem Polyvinylalkohol vergossen oder extrudiert und gemeinsam gereckt.

Die heute verwendete iodhaltige Folie hat zwei gravierende Nachteile. Sie zeigt im Bereich von 400 bis 450 nm eine unzureichende Sperrstellung, wodurch die Folie in Sperrstellung nicht das gewünschte Schwarz oder Dunkelgrau, sondern ein Blau zeigt. Dieser Effekt wird mit dem Fachausdruck "blue-leakage" bezeichnet. Außerdem ist die iodhaltige Folie bei Erwärmung instabil, weil das Iodmolekül leicht aus der Folie heraussublimieren kann.

Versuche, die blue-leakage von Iod-Polarisatoren durch Zusatz entsprechender Farbstoffe zu kompensieren, haben bisher nicht zum gewünschten Erfolg geführt:
1. Durch nicht-dichroitische gelbe Farbstoffe (Blau/Violett-Absorber) läßt sich die "leakage" des Sperrzustandes zwar beheben, gegenüber unpolarisiertem Licht und gegenüber linear polarisiertem Licht ist die Folie dann nicht mehr farbneutral. Sie wirkt häufig grünstichig. Im Wellenlängenbereich des Absorbers besteht ungenügender Dichroismus und mangelnde Transparenz.
2. Die Verwendung einer zweiten dichroitischen Substanz zur Behebung der "leakage" ist ebenfalls problematisch, weil zwischen Iod und dieser Substanz chemische (Aggresivität von Iod) und optische (andere Übergangsverbote) Unverträglichkeiten zu Verlusten an polarisierender Wirkung führen, d.h. der Unterschied zwischen Transmissions- und Sperrstellung wird geringer, der Kontrast nimmt ab.

Polarisationsfolien aus Polyvinylalkohol, die Polyacetylen als dichroitische Substanz enthalten (POLPAC), haben den Vorteil, stabil zu sein und in Transmissionsstellung für linear polarisiertes Licht sowie für unpolarisiertes Licht über den gesamten interessierenden Lichtwellenlängenbereich von 400 bis 700 nm eine annähernd gleich starke Transmission und daher keinen Farbstich zu zeigen. Aber auch Polarisationsfolien auf Basis von POLPAC zeigen im Bereich 400 bis 450 nm eine Schwäche in der Sperrstellung, d.h. eine, wenn auch gegenüber Iod geringere, blue leakage. Diese macht sich bei starker Hinterleuchtung mit Licht, das große kurzwellige Anteile hat, bemerkbar.

Aufgabe der vorliegenden Erfindung ist die Vermeidung der blue-leakage ohne die übrigen guten Eigenschaften der POLPAC-Folie zu beeinträchtigen. Dazu war der Polarisationsgrad heller POLPAC-Folien im Wellenlängenbereich 400-500 nm zu steigern.

Überraschenderweise wird diese Aufgabe dadurch gelöst, daß man in eine POLPAC-Folie nach dem Recken Iod diffundieren läßt.

Dies kann dadurch geschehen, daß man die Folie in eine Iod-Lösung oder eine wäßrige I₂/KI-Lösung taucht oder daß man Iod über die Gasphase eindiffundieren läßt. Es ist auch möglich, zur Fixierung des Ordnungszustandes die Folie mit Borsäure- oder Borat-haltiger Lösung zu behandeln.

Gegenstand der Erfindung ist daher eine Polarisationsfolie auf der Basis Polyvinylalkohol, dadurch gekennzeichnet, daß sie als lichtpolarisierende Substanzen Polyacetylen und Iod enthält.

Gegenstand der Erfindung ist weiterhin ein Verfahren zur Herstellung von Polarisationsfolien auf der Basis Polyvinylalkohol, in denen Polyacetylen und Iod gemeinsam als lichtpolarisierende Substanzen enthalten sind, wobei man in einer Lösung des Polyvinylalkohol Acetylen polymerisiert, die Polyacetylen enthaltende Polyvinylalkohollösung durch Extrudieren oder Gießen zu Folien verarbeitet, diese auf das 4- bis 13-fache reckt und anschließend in diese Folie Iod diffundieren läßt.

Zum Recken wird die Folie so eingespannt, daß das Verhältnis bₒ/lₒ < 3 , vorzugsweise < 2 ist, wobei bₒ die Ausgangsbreite der Folie und lₒ die eingespannte Anfangslänge bzw. Recksspaltlänge ist.

Die Polarisationsfolie kann anschließend mit anderen Folien oder Glas kaschiert werden.

Das Polyacetylen ist vorzugsweise homogen in der Folie verteilt. Seine Menge beträgt insbesondere 0,1 bis 10 Gew.-% an der gesamten Polarisationsfolie. Das Iod ist üblicherweise inhomogen in der Weise in der Polarisationsfolie verteilt, daß die Iodkonzentration in der Nähe der Oberfläche größer als im Inneren der Folie ist. Die Menge an Iod, die die Folie aufnimmt, ist gering und analytisch schwer bestimmbar. Man gibt deswegen üblicherweise die Konzentration an Iod- bzw. I₂/KI-Behandlungslösung und die Behandlungsdauer an, die zwischen Sekunden und Stunden liegen kann, vorzugsweise zwischen 30 Sekunden und 30 Minuten. Die Konzentrationen der Lösungen betragen vorzugsweise 0,1 bis 3 Gew.-% I₂ und 0 bis 15 Gew.-% KI. Höhere Konzentrationen bzw. längere Einwirkungsdauer führt im allgemeinen zu einer höheren Aufnahme an Iod.

### Beispiele

### Beispiel 1

### Herstellung des Polyvinylalkohol-Polyacetylen-Copolymerisates:

Unter Luftausschluß wurde bei 45°C in eine 6 gew.-%ige Lösung von Polyvinylalkohol (Vinylacetat-Gehalt ca. 1 Gew.-%) in trockenem N-Methylpyrrolidon pro 100 g Polyvinylalkohol 1,25 mmol [NiPh(Ph₂PCHCPhO)-(i-Pr₃PCHPh)] eingerührt und während 3 Minuten Acetylen polymerisiert. Das schwarz-blaue Polymerisat wurde in Aceton gefällt, mit Aceton gründlich gewaschen und ca. 8 gew.-%ig in Wasser gelöst. (Ph = Phenyl; i-Pr = Isopropyl).

### Beispiel 2

### Herstellung der Gießfolie:

Zur wäßrigen Lösung aus Beispiel 1 wurden 16 Gew.-% Glyzerin bezogen auf Polymer eingerührt. Die fertige Gießlösung wurde feinfiltriert (10 µm), entgast und anschließend bei ca. 40°C auf eine Polyethylenterephtalat (PET)-Trägerfolie in einer Naßschichtdicke von ca. 350 µ aufgetragen.

### Beispiel 3

### Herstellung einer Polyacetylen-haltigen Polarisationsfolie (POLPAC-Folie)

Die bis zu einer Restfeuchte von ca. 20 Gew.-% getrocknete Folie wurde von der Trägerfolie abgezogen und bei ca. 170°C gereckt, wobei die Folie zur Reckung so eingespannt wurde, daß das Breiten-/Längenverhältnis bₒ/lₒ zu Beginn 1,5 war.

Der Reckgrad betrug ca. 700 %. Die Foliendicke nach dem Recken war 10,4 µm. Die breitbandig hochpolarisierende Folie hatte bei 600 nm 39,5 % Transmission für unpolarisiertes Licht (Tᵤₙₚₒₗ) und einen Polarisationsgrad (P) von 99,97 %. Im Wellenlängenbereich zwischen 510 nm und 700 nm lag der Polarisationsgrad über 99 %, im Bereich zwischen 470 nm und 720 nm über 95 %. Zwei gekreuzte Polarisatoren wirken bei starker Hinterleuchtung mit weißem Licht, welches hohe kurzwellige Anteile hat, tiefblau-violett.

### Beispiel 4

### Herstellung einer Iod-behandelten Polyacetylen-Polarisationsfolie (POLPAC/Iod-Folie):

Eine gemäß Beispiel 3 hergestellte POLPAC-Folie wurde bei 20°C, 30 Sekunden im gespannten Zustand in eine wäßrige Iod-Kaliumiodid-Lösung (1 Gew.-% Iod, 5 Gew.-% Kaliumiodid in Wasser) getaucht. Nach Trocknung bei 50°C wurden folgende optische Werte gemessen:
Tᵤₙₚₒₗ = 39,8 % bei 600 nm
P = 99,98 % bei 600 nm
Die Folie zeigte also bei 600 nm vergleichbar exzellente Polarisationseigenschaften wie vor der Iod-Behandlung. Ein Polarisationsgrad über 95 % wurde aber jetzt im gesamten Wellenlängenbereich 400-700 nm erzielt.

### Beispiel 5

### Herstellung einer Iod-behandelten Polyacetylen-Polarisationsfolie (POLPAC/Iod-Folie):

Eine nach Beispiel 3 hergestellte Polarisationsfolie wurde im gespannten Zustand 5 Minuten lang bei 30°C in eine wäßrige Iod-Kaliumiodid-Lösung (0,5 Gew.-% Iod, 2,5 Gew.-% Kaliumiodid in Wasser) getaucht. Nach dem Trocknen bei Raumtemperatur waren die optischen Werte wie folgt:
Tᵤₙₚₒₗ = 39,5 % bei 600 nm
P = 99,99 % bei 600 nm
P ≥ 99,0 % bei 400-700 nm

Die breitbandig hoch-polarisierende Folie zeigte bei 600 nm vergleichbare Transmissions- und Polarisationswerte wie in Beispiel 3. Ein Polarisationsgrad ≥ 99 % wurde hier aber im gesamten Wellenlängenbereich zwischen 400 nm und 700 nm erzielt.

Zwei gekreuzte Polarisatoren wirken bei starker Hinterleuchtung mit weißem Licht schwarz.

## Patentansprüche

1. Polarisationsfolie auf der Basis Polyvinylalkohol, dadurch gekennzeichnet, daß sie als lichtpolarisierende Substanzen Polyacetylen und Iod enthält.

2. Verfahren zur Herstellung einer Polarisationsfolie auf der Basis Polyvinylalkohol, in der Polyacetylen und Iod gemeinsam als lichtpolarisierende Substanzen enthalten sind, wobei man in einer Lösung des Polyvinylalkohol Acetylen polymerisiert, die Polyacetylen enthaltende Polyvinylalkohollösung zu Folien verarbeitet, diese auf das 4- bis 13-fache reckt und anschließend in diese Folie Iod diffundieren läßt.

3. Verfahren nach Anspruch 2, wobei bei der Reckung die Folie so eingespannt wird, daß das Verhältnis bₒ/lₒ < 3 ist, wobei bₒ die Ausgangsbreite und lₒ die eingespannte Anfangslänge der Folie ist.

4. Polarisationsfolie nach Anspruch 1, dadurch gekennzeichnet, daß das Polyacetylen in Polyvinylalkohol durch eine nickelkatalysierte Polymerisationsreaktion hergestellt wird.

## Claims

1. Polarizing film based on polyvinyl alcohol, characterized in that it contains polyacetylene and iodine as light-polarizing substances.

2. Process for the production of a polarizing film based on polyvinyl alcohol and containing polyacetylene and iodine together as light-polarizing substances, in which acetylene is polymerized in a solution of the polyvinyl alcohol, the polyacetylene-containing polyvinyl alcohol solution is converted into films, the latter are stretched 4- to 13-fold, and iodine is then allowed to diffuse into this film.

3. Process according to Claim 2, in which, during stretching, the film is clamped in such a way that the ratio bₒ/lₒ is < 3, where bₒ is the initial width and lₒ is the clamped initial length of the film.

4. Polarizing film according to Claim 1, characterized in that the polyacetylene is produced in polyvinyl alcohol by a nickel-catalysed polymerization reaction.

## Revendications

1. Feuille polarisante à base de poly(alcool vinylique), caractérisée en ce qu'elle contient du polyacétylène et de l'iode comme substances polarisant la lumière.

2. Procédé de production d'une feuille polarisante à base de poly(alcool vinylique), dans laquelle du polyacétylène et de l'iode sont contenus conjointement comme substances polarisant la lumière, dans lequel on polymérise de l'acétylène dans une solution de poly(alcool vinylique), on met sous forme de feuilles la solution de poly(alcool vinylique) contenant du polyacétylène, on étire ces feuilles de 4 à 13 fois puis on fait diffuser de l'iode dans ces feuilles.

3. Procédé selon la revendication 2, dans lequel, lors de l'étirage, la feuille est serrée de manière que le rapport b₀/l₀ soit inférieur à 3, b₀ étant la largeur initiale et l₀ étant la longueur initiale serrée de la feuille.

4. Feuille polarisante selon la revendication 1, caractérisée en ce que le polyacétylène est préparé dans le poly(alcool vinylique) par une réaction de polymérisation catalysée par le nickel.
